# EUROPÄISCHE PATENTSCHRIFT

(11) **EP 1 018 117 B1**
(45) Veröffentlichungstag und Bekanntmachung des Hinweises auf die Patenterteilung: **28.11.2001**
(21) Anmeldenummer: 98947542.1
(22) Anmeldetag: 22.09.1998
(51) Int. Cl.: G11B 31/00, G11B 19/02, G11B 20/00, G11B 20/10

(54) **AUDIO-PLAYER UND VERFAHREN ZUR STEUERUNG VON AUDIO-DATEN DURCH DEN AUDIO-PLAYER**
AUDIO-PLAYER AND METHOD FOR CONTROLLING AUDIO DATA USING SAID AUDIO-PLAYER
LECTEUR AUDIO ET PROCEDE DE COMMANDE DE DONNEES AUDIO PAR LEDIT LECTEUR AUDIO

(30) Priorität: 22.09.1997 DE 19741503
(43) Veröffentlichungstag der Anmeldung: 12.07.2000
(73) Patentinhaber: Pontis Electronic GmbH, 92521 Schwarzenfeld (DE)
(72) Erfinder: BÖHM, Erich, D-92224 Amberg (DE)
(74) Vertreter: Bergmeier, Werner, Dipl.-Ing.
(86) Internationale Anmeldenummer: EP9806022
(87) Internationale Veröffentlichungsnummer: WO9916075

(56) Entgegenhaltungen:
- EP-A- 0 786 774
- US-A- 4 639 225

## Beschreibung

Die Erfindung betrifft einen Audio-Player, mit einem wechselbaren Datenträger für Audio-Daten und ein dazugehöriges Verfahren zur Steuerung von Audio-Daten durch den Audio-Player.

Als ein multimedia-fähiges, elektronisches Gerät ist der Personalcomputer (PC) oder ein mit ihm koppelbares Gerät bekannt geworden. Unter Multimedia sei das Zusammenwirken von Grafik, Tönen und/oder Texten innerhalb einer Applikation am Computer verstanden, wobei bereits allein die Ausgabe von Tondateien bei einer Anwendung unter dem Begriff Multimedia verstanden werden soll.

Mit der Entwicklung des Multimedia-PC stand ein Computer zur Verfügung mit dem ein Zusammenwirken multimedialer Bestandteile möglich war. Der Mindeststandard, den ein Computer für Multimedia-Anwendung erfüllen muß, wurde durch den Standard MPC definiert, derzeit MPC 2.

Der Multimedia-PC ist koppelbar mit Audio- und/oder Videogeräten. Eine solche Anlage, beispielsweise bestehend aus Multimedia-PC und Audio-Player, ist von der Hardware umfangreich und benötigt viel Standfläche. Insbesondere beim Musik-Player als einem Audio-Gerät steht die weitere Nutzung der CD-ROM und eines CD-ROM-Laufwerkes einer bisherigen Größenreduzierung des Players entgegen. Mit der gegenwärtigen Entwicklung einer DVD (Digital Versatile Disk) als Datenträger für Audio-Player wird zwar eine neue Dimension an Speicherkapazität erzielt, aber der Einsatz eines Laufwerkes bei bekannten Audio-Playern wird beibehalten. Die Nachteile mechanisch beweglicher Bauteile am Laufwerk und deren Störanfälligkeit bleibt bestehen. Die CD-ROM ist ebenso wie eine DVD ein wechselbarer Datenträger für einen Audio-Player, wobei stets ein Laufwerk erforderlich ist.

Aus der EP 0786774 A2 ist ein Audio-Wiedergabe- und -Aufzeichnungsgerät bekannt, welches Daten, beispielsweise für Musikwiedergabe, von einer Sendestation abruft und in dem Gerät abspeichert. Es ist hierfür in dem Gerät eine Festplatte zum Speichern der Daten fest eingebaut. Die Festplatte ist eine sich mit hoher Geschwindigkeit drehende, in dem Ausführungsbeispiel der EP 0786774 A2 1,8 Inch große Scheibe mit einem Laufwerk. Die äußere Form der Baueinheit der Festplatte kann einer Karte (72) gleichen, die fest in das Gerät eingebaut wird. Auf der Festplatte werden die Daten bis zu einer Abspieldauer von etwa 30 Minuten abgelegt und bei Bedarf abgerufen. Will der Benutzer andere Musikstücke abrufen können, so muß er die vorherigen Daten auf der Festplatte löschen und mit Daten der Sendestation neu bespielen. Als künftigen Fortschritt und als künftiges Ziel der Weiterentwicklung der Vorrichtung der EP 0786774 A2 wird die Entwicklung größerer Festplatten bis zu 1GB Kapazität gesehen, welche in der Vorrichtung fest eingebaut werden können (Spalte 10). Dies hat jedoch den Nachteil, daß auch hier die Kapazität der Festplatte beschränkt sein wird und zumindest teilweise wieder gelöscht werden muß. Darüber hinaus sind auch derartige Karten besonders stoßempfindlich. Außerdem werden in der EP 0786774 A2 Karten (74) für erweiterte Funktionen wie beispielsweise zum Einsatz des Gerätes als Faxgerät oder Navigationsgerät vorgeschlagen. Die Nachteile der eingebauten Festplatte bleiben dadurch aber weiterhin bestehen. Außerdem sind die Karten (74) im PCMCIA Standard immer noch sehr groß und unhandlich.

Aufgabe der Erfindung ist es, einen Audio-Player zu entwickeln, der autark betrieben werden kann, wobei unter Verzicht auf eine eingebaute Festplatte, ein CD-ROM-Laufwerk oder ein ähnliches, mit beweglichen Teilen funktionierendes Laufwerk dennoch eine Wiedergabe von Tönen in HiFi-Qualität ermöglicht wird und das Speichermedium klein ist und eine Vielfalt von Anwendungen ermöglicht.

Eine weitere Aufgabe ist, daß der Audio-Player in einer vorteilhafter Ausgestaltung wahlweise autark oder in Kopplung zu einer Datenquelle, insbesondere einem Computer oder einem Multimedia-PC, einem CD-Spieler oder einem anderen Wiedergabegerät betrieben werden kann.

Eine weitere Aufgabe ist die Vermeidung der oben genannten Nachteile.

Die Aufgaben werden gelöst nach den Merkmalen des Anspruchs 1 und nach den Merkmalen des Anspruchs 10.

Der Audio-Player (Player) hat vorteilhafterweise einen Steckplatz für eine Multimedia-Karte (nachfolgend MM-Karte genannt). Die MM-Karte beinhaltet mindestens einen Mikroprozessor zur Datensteuerung und einen Speicher, insbesondere einen Flash-Speicher. Zusätzliche oder alternative andere Speicher wie ROM- und/oder RAM-Bausteine sind auch möglich, aber nicht zwingend erforderlich. Weist der Audio-Player mehrere Steckplätze für MM-Karten auf, so wird die Speichermenge weiter erhöht, da gleichzeitig oder nacheinander auf Dateninformationen zurückgegriffen werden kann.

Die bisher bekannten Karten sind PC-Karten nach PCMCIA-Standard. Die neuartige MM-Karte wird als wechselbarer Datenträger für den Audio-Player benutzt und ersetzt die CD-ROM mit dem CD-ROM-Laufwerk bzw. eine sonstige fest eingebaute Festplatte in dem Gerät. Das erbringt einen großen Vorteil, denn es kann generell auf mechanisch beanspruchte Teile eines Laufwerks verzichtet werden: Damit sinkt die Stoßempfindlichkeit des Players insgesamt. Die MM-Karte ist in ihren Abmessungen auch wesentlich kleiner und damit platzsparender als eine PC-Karte nach PCMCIA. Es ist jedoch auch grundsätzlich eine Beibehaltung der Abmessungen nach PCMCIA möglich, indem mehrere MM-Karten auf einem Träger mit derartigen Abmessungen aufgebracht sind oder der Träger für Beschriftungen diese Maße aufweisen soll.

Die MM-Karte ist Datenträger von mindestens Audio-Daten. Audio-Daten sind wandelbar in Töne wie Musik oder Sprache. In einer speziellen Ausgestaltung des Players kann dieser zusätzlich mit einem Signalprozessor ausgestattet sein, der einen Algorithmus zur Umwandlung von vorzugsweise komprimierten Textdaten in Audio-Daten realisiert. Dortiger Signalprozessor kann vom Mikro-Controller des Audio-Players gesteuert werden. Die Wiedergabe dieser Audio-Daten erfolgt in Sprache. Damit ist es möglich auf der MM-Karte ebenfalls gespeicherte Textdaten in Audio-Daten zu wandeln und letztlich in Sprache wiederzugeben. Das entspricht einem "sprechenden Buch". Dieses Zusammenwirken von Textdaten und Audio-Daten über die Karte als Datenträger führt zur Bildung des Begriffs der MM-Karte.

Der Player kann autark oder vorzugsweise in Verbindung mit einem Multimedia-PC betrieben werden.

Die Datenverbindung zwischen einer Datenquelle, vorzugsweise einem Computer oder einem Multimedia-PC und dem Audio-Player erfolgt über eine insbesondere serielle Schnittstelle. Das könnte eine serielle Schnittstelle nach RS 232-Standard, vorteilhafterweise nach USB-Standard sein. USB ist der Universal Serial Bus, der ein echtes Hot-Plug-and-Play ermöglicht. Der Multimedia-PC steht über die serielle Schnittstelle mit dem Mikro-Controller des Audio-Players in Verbindung. Um Steuerungsfunktionen zu erfüllen, besitzt der Mikro-Controller auch ROM- und RAM-Bauelemente. Vom Mikro-Controller führt eine Datenverbindung zum Steckplatz für die MM-Karte. Wenn die MM-Karte in den Steckplatz eingeführt ist, besteht eine Datenverbindung zu einem Decompression Circuit. Diese Verbindung besitzt eine High-Speed-Schnittstelle, die hohe Datentransferraten ermöglicht. Der Decompression Circuit hat mindestens einen Signalprozessor. Von diesem Schaltkreis zur Dekomprimierung der Audio-Daten besteht eine Verbindung zu einem D/A-Wandler. Vom D/A-Wandler führt die Verbindung weiter zu einer Wiedergabeeinheit, die mindestens einen Verstärker und eine Lautsprechereinheit bzw. eine Kopfhörereinheit hat.

In vorteilhafter Weise ermöglicht es der Player, komprimierte Audio-Daten vom Speicher des Multimedia-PCs auf der MM-Karte des Players zu speichern. Dies wird ermöglicht durch ein Download vom Speicher der Datenquelle, gesteuert durch den Mikro-Controller des Players. Der Mikro-Controller besitzt ebenfalls Datenverbindungen zu einer Tastatur und optional zu einem Anzeige-Display. Die Tastatur beinhaltet mindestens bekannte Funktionstasten eines Musik-Players.

Die Audio-Daten sind auf der MM-Karte hoch komprimiert gespeichert. Die Datenreduktion entspricht mindestens dem Verfahren nach MPEG II Layer 3. Je höher die Kompressionsrate der Audio-Daten, desto länger ist die Abspielzeit. Je mehr Informationen gespeichert werden, desto höher ist die Wiedergabequalität. Audio-Daten repräsentieren Töne wie Musik oder Sprache.

Im Zusammenwirken zwischen Mikro-Controller und Mikroprozessor (oder einem ASIC-Schaltkreis) der MM-Karte können über die aufgezeigte Verbindung die komprimierten Audio-Daten dem Decompression Circuit zur Dekompression übergeben werden. Dieser Vorgang kann ausgelöst werden durch Aktivierung der Taste "Play" auf der Tastatur des Players. Dabei werden die komprimierten Audio-Daten aus dem Flash-Speicher der MM-Karte herausgelesen.

Der Signalprozessor des Decompression Circuit ermöglicht eine hohe Verarbeitungsgeschwindigkeit, die durch die High Speed-Schnittstelle unterstützt wird. Der Decompression Circuit speist über eine Verbindung den D/A-Wandler. Vom D/A-Wandler werden die gebildeten Signale an eine Wiedergabeeinheit geliefert. Die Wiedergabeeinheit enthält mindestens einen Verstärker und eine Lautsprechereinheit und ermöglicht beim Abspielen die Wiedergabe von Tönen.

Das Verfahren zur Steuerung von Audio-Daten kann
- Audio-Daten von einer Datenquelle auf eine MM-Karte als Datenträger übertragen, um diese Daten von dort zum Abspielen durch den Audio-Player zu bringen, wobei in einer weiteren Ausgestaltung auch Textdaten auf die MM-Karte übertragen und gespeichert werden und dort in Audio-Daten gewandelt werden können, und/oder
- von einer in den Steckplatz eingesetzten MM-Karte die dort bereits komprimiert gespeicherten Audio-Daten zum Abspielen durch den Audio-Player bringen, und/oder
- Audio-Daten von der Datenquelle direkt auf dem Audio-Player zum Abspielen bringen.

Die Audio-Daten für den Audio-Player werden mittels wechselbarem Datenträger oder über eine, insbesondere serielle, Schnittstelle geliefert. Die gelieferten Audio-Daten werden oder sind komprimiert, und werden mittels eines Mikro-Controllers des Audio-Players als komprimierte Audio-Daten von einem Speicher einer Datenquelle in einen Speicher der MM-Karte transportiert und dort gespeichert. Mit einer Steuerung werden durch den Mikroprozessor der MM-Karte vom Speicher der MM-Karte komprimierte Audio-Daten direkt oder über den Mikro-Controller an einen Decompression Circuit transportiert, dort dekomprimiert und dann über einen D/A-Wandler an eine Wiedergabeeinheit gegeben. Komprimierte Audio-Daten werden von einem Speicher der Datenquelle an den Decompression Circuit transportiert und dort dekomprimiert und dann über den D/A-Wandler an die Wiedergabeeinheit gegeben.

Der Audio-Player mit dem Verfahren zur Steuerung von Audio-Daten ermöglicht vorteilhafterweise eine Tonwiedergabe in HiFi-Qualität.

Die komprimierten Audio-Daten können wahlweise in verschiedenen Datentransferraten zum Decompression Circuit übertragen werden. Damit sind unterschiedliche Wiedergabequalitäten, aber auch unterschiedliche Speichermengen erzielbar. Als vorteilhaft hat sich erwiesen, daß die Datentransferrate mindestens 92 kbit/s beträgt.

Vorteilhafterweise wird über eine Tastatur der Mikro-Controller ein wahlfreier Zugriff auf den Speicher der MM-Karte ermöglicht, wobei insbesondere bei Auslösung eines Vorgangs "Vorwärts" oder "Rückwärts" durch die Tastatur die Übertragung von Audio-Daten unterbrochen wird.

Wird die Unterbrechung der Datenübertragung im Speicher durch Setzen eines Datenzeigers markiert, so ist die Stelle, an der unterbrochen wurde, schnell und einfach wieder aufzufinden.

Vorteilhafterweise wird durch den Mikro-Controller des Audio-Players ein Signalprozessor durch Programmdaten aus der MM-Karte so gesteuert, daß auf der MM-Karte gespeicherte Textdaten in Audio-Daten gewandelt werden.

Eine weitere vorteilhafte Ausbildung der Erfindung besteht darin, daß durch den Mikro-Controller des Audio-Players ein Signalprozessor durch Programmdaten aus der MM-Karte so gesteuert wird, daß auf der MM-Karte gespeicherte Textdaten nicht in Audio-Daten gewandelt werden, sondern über die Wiedergabeeinheit auf einem Display wiedergegeben werden. Damit ist der erfindungsgemäße Audio-Player noch vielseitiger einsetzbar.

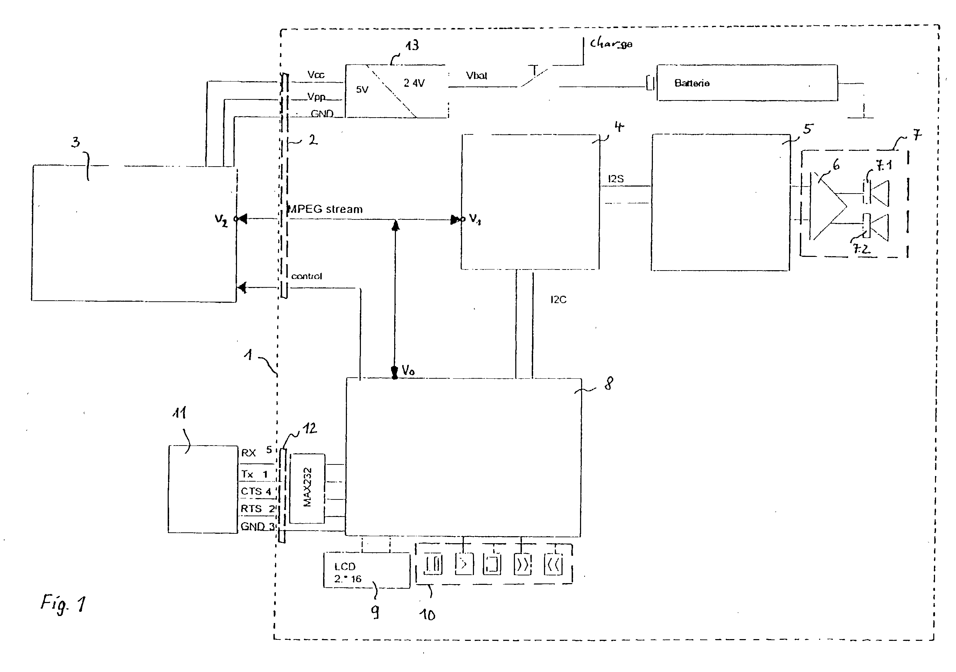

Nachfolgend wird ein Ausführungsbeispiel zur Erfindung beschrieben. Dabei werden dargestellt in
- Fig. 1: wichtigste Funktionsgruppen eines Audio-Players und deren Datenverbindungen.

Figur 1 beschränkt sich auf die wichtigsten Funktionsgruppen, die zum Verständnis der Funktion der Erfindung wesentlich sind. Erkennbar ist, daß der Audio-Player 1 einen Steckplatz 2 für eine MM-Karte 3 hat. Die MM-Karte 3 ersetzt die bisher bei Audio-Playern übliche CD-ROM mit CD-ROM-Laufwerk oder Festplatte.

Um ein Zusammenwirken mit dem Player zu ermöglichen, ist auf der MM-Karte 3 ein Mikroprozessor (oder ein ASIC, d.h. ein Anwenderschaltkreis) zur Steuerung und ein Speicher, insbesondere ein Flash-Speicher integriert. Durch den integrierten Mikroprozessor werden Ressourcen zur Ansteuerung des Flash-Speichers im Audio-Player 1 gespart. Der Flash-Speicher kann elektronisch sowohl beschrieben als auch gelöscht werden. Er umfaßt beispielsweise eine Speicherkapazität von 4 MB auf der MM-Karte. Damit wird der CD-ROM-Speicher bisheriger Audio-Player verlassen.

Die MM-Karte ist infolge des Steckplatzes 2 manuell austauschbar, d.h. wechselbar. Karte 3 und Steckplatz 2 haben die notwendigen Kontakte, die beim Einstecken der Karte 3 geschlossen werden. Gegenüber jeglichem Laufwerk ist die MM-Karte 3 stoßunempfindlich und umweltbeständig. Dieser Datenträger (MM-Karte) ist wesentlich kleiner als eine Kreditkarte und damit kleiner als bisher bekannte PC-Karten nach Standard PCMCIA. Es ist jedoch auch eine Ausführung der MM-Karte nach geometrischen Abmessungen des PCMCIA-Standards möglich.

Der Audio-Player 1 hat beispielsweise eine RS 232-Schnittstelle 12 (es wäre zum Beispiel auch eine USB-Schnittstelle möglich), um eine Ankopplung an eine Datenquelle, die im folgenden als ein Multimedia-PC 11 bezeichnet wird, zu ermöglichen. Diese Schnittstelle ist nicht zwingend erforderlich, aber sinnvoll, wenn ein Zusammenwirken mit einer Datenquelle erforderlich wird. Das wird an anderer Stelle beschrieben.

Der Audio-Player 1 hat mindestens einen Mikro-Controller 8. Dieser Mikro-Controller 8 ist über Daten- und Steuerleitungen mit der RS 232-Schnittstelle 12 verbunden, die andererseits die Verbindung zum Multimedia-PC 11 hat. Eine andere Verbindung existiert mit dem Übertragungsweg V0V1 zum Compression Circuit 4. Ein Übertragungsweg zwischen den Punkten V0, V1, V2 hat rein symbolischen Charakter und soll mit wenig Zeichnungsaufwand notwendige Verbindungsmöglichkeiten für den Transport von Audio-Daten und Steuersignalen darstellen.

In einer besonderen Ausführung kann auch vorgesehen sein, daß Daten aus der MM-Karte 3 auf dem Weg V2V0 ausgelesen und in dem Mikro-Controller 8 kontrolliert werden. Die Kontrolle kann beispielsweise die Abspielberechtigung, das Nutzungsrecht oder einen Kopierschutz betreffen. Nach positiver Kontrolle werden die Daten sodann auf dem Weg V0V1 an einen Decompression Circuit 4 weitergegeben.

Der Mikro-Controller 8 besitzt weiterhin eine Verbindung zu einer Tastatur 10 und wahlweise ein Anzeige-Display 9. Das Anzeige-Display 9 könnte aus Kostengründen entfallen. Die Tastatur besitzt mindestens die Tasten für bekannte Grundfunktionen eines Musik-Players. Vom Mikro-Controller 8 bestehen weiterhin Steuerungs- und Datenverbindungen mit dem Übertragungsweg V0V2 zum Steckplatz 2 und damit zum Mikroprozessor und den Flash-, RAM oder ROM-Speichern der MM-Karte 3.

Über den Steckplatz 2 besteht eine Verbindung zu einer Stromversorgung 13, die die integrierten Baugruppen auf der MM-Karte 3 mit Energie versorgt. Andererseits besteht eine Datenverbindung mit dem Übertragungsweg V2V1 von der Flash-Memory-Karte 3 zu einem Decompression Circuit 4. Dieser übernimmt die Funktion eines Decoders zur Dekomprimierung von Audio-Daten. Er ist deshalb mindestens mit einem Signalprozessor ausgerüstet. Der Ausgang des Decompression Circuit 4 ist über Verbindungsleitungen mit einem D/A-Wandler 5 verbunden. Das kann vorteilhafterweise ein Stereo D/A-Wandler sein. Der Ausgang des D/A-Wandlers ist mit einer Wiedergabeeinheit 7 verbunden. Diese umfaßt mindestens einen Verstärker 6 und nach dessen Ausgang eine Lautsprechereinheit, vorzugsweise Stereolautsprecher 7.1, 7.2. Es sind für die Lautsprechereinheit alternativ auch Kopfhörer einsetzbar oder beides. Die Wiedergabeeinheit ist in der Lage Töne im Sinne von Sprache bzw. Musik zu erzeugen.

Das Verfahren zur Steuerung von Audio-Daten durch den Audio-Player 1 nutzt den Mikro-Controller 8. Bei Ankopplung eines Multimedia-PC 11 über die RS 232-Schnittstelle 12 besteht ein Zugriff des Mikro-Controllers 8 auf den Speicher des Multimedia-PCs 11. Das Verfahren arbeitet mit Audio-Daten, die nach Standard MPEG II Layer 3 komprimiert sind. Ein leistungsfähiges Komprimierungsverfahren ist besonders vorteilhaft, da bei der Verarbeitung von Audio-Daten enorme Datenmengen verarbeitet werden müssen.

Durch einen Download, gesteuert vom Mikro-Controller 8 im Zusammenwirken mit dem Multimedia-PC 11, können die komprimierten Audio-Daten vom Multimedia-PC 11 über den Übertragungsweg V0V2 in den Speicher der MM-Karte 3 übertragen und dort gespeichert werden. Im Falle einer Übertragung komprimierter Textdaten können diese auch auf der MM-Karte gespeichert werden. Vor einer Weitergabe müssen diese Textdaten durch den Signalprozessor der MM-Karte dort in Audio-Daten gewandelt werden, die dann einer Weiterverarbeitung zur Verfügung stehen. Der Algorithmus des Signalprozessors auf der MM-Karte kann auch so ausgeführt sein, daß er optional eine Wandlung der Textdaten in Audio-Daten unterdrückt und die Wiedergabe der dekomprimierten Textdaten auf einem Bildschirmdisplay bringt, so daß eine seitenweise Darstellung des Textes möglich wird (in Fig.1 nicht dargestellt).

Alternativ kann von dieser oder einer anderen mit anderen komprimiert gespeicherten Audio-Daten versehenen MM-Karte eine Datenübertragung zu dem Decompression Circuit 4 erfolgen. Dieser Vorgang kann beispielsweise ausgelöst werden durch Aktivierung der Taste "Play" auf der Tastatur 10. Damit werden die komprimierten Audio-Daten aus dem Speicher der MM-Karte 3 herausgelesen und dem Compression Circuit übergeben. Der Übertragungsweg V2V1 von der MM-Karte 3 zum Compression Circuit 4 wird durch eine High-Speed-Schnittstelle unterstützt.

Dieser Datenstrom kann in unterschiedlichen Datentransferraten übertragen werden, etwa 92 kbit/s, vorzugsweise etwa 128 kbit/s. Der Compression Circuit 4 ist ein Decoder zur Dekompression der Audio-Daten.

Es besteht auch die Möglichkeit, daß komprimierte Audio-Daten vom Multimedia-PC 11 auf dem Übertragungsweg V0V1 direkt (ohne MM-Karte 3) zum Compression Circuit 4 übertragen werden. Der Compression Circuit hat einen Signalprozessor, der eine hohe Verarbeitungsgeschwindigkeit garantiert. Der Signalprozessor realisiert den implementierten Dekompressions-Algorithmus. Es kann der Compression Circuit 4 mit dem Mikro-Controller 8 in einem IC integriert werden, so daß ein gemeinsames Bauteil existiert. Dies ermöglicht einen besonders kleinen und kostengünstigen Aufbau des Audio-Players.

Vom Decompression Circuit werden die dekomprimierten Daten einem D/A-Wandler 5 zugeführt. Das ist vorzugsweise ein Stereo D/A-Wandler. Die dort am Ausgang erhaltenen Signale werden einer Wiedergabeeinheit 7 zugeführt. Diese besteht mindestens aus einem Verstärker 6 und einer Lautsprechereinheit mit vorzugsweise Stereolautsprechern 7.1, 7.2 und/oder mit Stereokopfhörern.

Es kann vorgesehen sein, daß der Mikro-Controller 8 bei Auslösung eines Vorgangs, beispielsweise "Vorwärts" oder "Rückwärts", durch die Tastatur 10 die Übertragung von Audio-Daten unterbricht. Damit wird bei dieser Bedienung des Gerätes unkontrollierte Datenwiedergabe vermieden.

Wird die Unterbrechung der Datenübertragung im Speicher 3 durch Setzen eines Datenzeigers markiert, so ist die Stelle, an der unterbrochen wurde schnell und einfach wieder aufzufinden. Es kann damit zwischen mehreren Stellen auf dem Speicher hin- und hergesprungen werden.

Im Sinne eines Kombigerätes ist der beschriebene Audio-Player auch in einer Baueinheit mit einem CD-Spieler, DVD-Spieler oder einem ähnlichen Gerät kombinierbar. Daten von den herkömmlichen Geräten können dabei genutzt werden um die MM-Karte zu bespielen. Die MM-Karte kann anschließend aus dem Kombigerät entnommen und in einen tragbaren Audio-Player eingesetzt werden. Es kann dabei ausreichend sein, wenn der Audio-Player in dem Kombigerät nur als Aufnahmegerät zum Bespielen der MM-Karte ausgebildet ist. In einer weiteren Ausbildung der Erfindung ist eine Koppelstelle des Audio-Players zu einem stationären CD-Spieler oder ähnlichem Wiedergabegerät vorgesehen. Der Audio-Player wird dabei an dem stationären Gerät angekoppelt zur Aufnahme und/oder Wiedergabe der MM-Karten. Dies kann eine verbesserte Wiedergabe der Daten erlauben. Die Ankoppelung erfolgt dabei durch eine Verbindung des stationären Gerätes mit dem Mikro-Controller 8 und/oder dem Ausgang des D/A-Wandlers 5.

Besonders vorteilhaft ist der Audio-Player gestaltet durch die Verwendung einer "embedded application". Dadurch wird vermieden, daß eine aufwendige Bus-Struktur eingesetzt werden muß, welche insbesondere die Kosten des Gerätes vergrößern würde. Es wird damit zwar die Funktionalität eingeschränkt, da nur die eine abgelegte Funktionalität erfüllbar ist, aber es wird damit ein Betriebssystem, wie es in einer PC-ähnlichen Struktur bzw. einem Bus erforderlich wäre, vermieden. Insbesondere hierdurch werden die Kosten reduziert.

Durch die Verwendung eines großen graphischen Displays sind weitere Funktionen mit dem Audio-Player zu realisieren. So kann beispielsweise die wiedergegebene Musik graphisch unterstützt werden.

Durch die Verwendung einer plattformunabhängigen Programmiersprache, wie beispielsweise JAVA, ist der Audio-Player universell einsetzbar. Die Dekomprimierung der Daten auf der Karte kann damit produktunabhängig erfolgen. In einer besonderen Ausführung des Audio-Players kann vorgesehen sein, daß die MM-Karte nahezu vollständig in dem Audio-Player eingeführt wird. Dadurch wird eine Beschädigung der MM-Karte vermieden. Wird der Einschub in dem Audio-Player mittels eines Schiebers verschlossen, so wird sichergestellt, daß die MM-Karte vor dem Herausfallen oder vor einer Verschmutzung geschützt ist. Dies kann insbesondere dann wichtig sein, wenn der Audio-Player in einer rauhen Umgebung eingesetzt werden soll. Da die MM-Karten sehr klein sein können, ist damit ein zuverlässiger Schutz vor Verlust der MM-Karte gewährleistet.

## Patentansprüche

1. Audio-Player mit einem wechselbaren Datenträger für Audio-Daten, wobei im Audio-Player (1) mindestens ein Mikro-Controller (8) mit Anschluß zu eigener, peripherer Tastatur (10) vorhanden ist, der eine Datenverbindung (V0V1) zu einem Decompression Circuit (4) und eine Datenverbindung (V0V2) zu einer MM-Karte (3) hat, die in einem Steckplatz (2) des Players (1) einsteckbar ist, und diese MM-Karte (3) direkt oder unter Zwischenschaltung des Mikro-Controllers (8) eine Datenverbindung (V2V1 oder V2V0-V0V1) zu dem Decompression Circuit (4) hat, dessen Ausgang zu einem D/A-Wandler (5) führt und der Ausgang des D/A-Wandlers (5) mit einer Wiedergabeeinheit (7) verbunden ist.

2. Audio-Player nach Anspruch 1, **dadurch gekennzeichnet, daß** der Audio-Player (1) eine, insbesondere serielle, Schnittstelle (12) zur Ankopplung an eine Datenquelle, insbesondere einen Computer oder eine Datenquelle (11), die eine Verbindung zu dem Mikro-Controller (8) hat, aufweist.

3. Audio-Player nach einem oder mehreren der vorangehenden Ansprüche, **dadurch gekennzeichnet, daß** der Mikro-Controller (8) ROM- und/oder RAM-Bauelemente besitzt.

4. Audio-Player nach einem oder mehreren der vorangehenden Ansprüche, **dadurch gekennzeichnet, daß** die MM-Karte (3) einen Mikroprozessor oder ASIC zur Datensteuerung und einen Speicher, insbesondere einen Flash-Speicher oder ROM, besitzt.

5. Audio-Player nach einem oder mehreren der vorangehenden Ansprüche, **dadurch gekennzeichnet, daß** die MM-Karte (3) einen Signalprozessor besitzt mit Programmalgorithmen zur Wandlung von Textdaten in Audio-Daten.

6. Audio-Player nach einem oder mehreren der vorangehenden Ansprüche, **dadurch gekennzeichnet, daß** der Decompression Circuit (4) mindestens einen Signalprozessor und eine serielle High-Speed-Schnittstelle zur MM-Karte (3) besitzt.

7. Audio-Player nach einem oder mehreren der vorangehenden Ansprüche, **dadurch gekennzeichnet, daß** in dem Audio-Player mehrere Steckplätze (2) für MM-Karten (3) angeordnet sind.

8. Audio-Player nach einem oder mehreren der vorangehenden Ansprüche, **dadurch gekennzeichnet, daß** an dem Audio-Player ein Grafikdisplay angeordnet ist.

9. Audio-Player nach einem oder mehreren der vorangehenden Ansprüche, **dadurch gekennzeichnet, daß** der Audio-Player in einem Audio-Wiedergabegerät, das ein anderes Speichermedium aufweist, integriert und/oder integrierbar ist.

10. Verfahren zur Steuerung von Audio-Daten durch einen Audio-Player (1), **dadurch gekennzeichnet, daß** die Audio-Daten für den Audio-Player (1) mittels wechselbarem Datenträger oder über eine, insbesondere serielle, Schnittstelle (12) geliefert werden und die gelieferten Audio-Daten komprimiert werden oder sind, mittels eines Mikro-Controllers (8) des Audio-Players (1) die komprimierten Audio-Daten von einem Speicher einer Datenquelle (11) in einen Speicher der MM-Karte (3) transportiert und dort gespeichert werden und/oder vom Speicher der MM-Karte (3) komprimierte Audio-Daten direkt oder über den Mikro-Controller (8) an einen Decompression Circuit (4) transportiert und dort dekomprimiert werden und dann über einen D/A-Wandler (5) an eine Wiedergabeeinheit (7) gegeben werden und/oder komprimierte Audio-Daten von einem Speicher der Datenquelle (11) an den Decompression Circuit (4) transportiert und dort dekomprimiert werden und dann über den D/A-Wandler (5) an die Wiedergabeeinheit (7) gegeben werden.

11. Verfahren nach Anspruch 10, **dadurch gekennzeichnet, daß** mit einer Steuerung durch einen Mikroprozessor oder einen ASIC der MM-Karte (3) vom Speicher der MM-Karte (3) komprimierte Audio-Daten direkt oder über den Mikro-Controller (8) an den Decompression Circuit (4) transportiert und dort dekomprimiert werden

12. Verfahren nach einem oder mehreren der vorangehenden Ansprüche, **dadurch gekennzeichnet, daß** die Audio-Daten nach einem Standard, vorzugsweise.MPEG II Layer 3, komprimiert sind und/oder werden.

13. Verfahren nach einem oder mehreren der vorangehenden Ansprüche, **dadurch gekennzeichnet, daß** die komprimierten Audio-Daten wahlweise in verschiedenen Datentransferraten zum Decompression Circuit (4) übertragen werden.

14. Verfahren nach einem oder mehreren der vorangehenden Ansprüche, **dadurch gekennzeichnet, daß** die Datentransferrate mindestens 92 kbit/s beträgt.

15. Verfahren nach einem oder mehreren der vorangehenden Ansprüche, **dadurch gekennzeichnet, daß** über eine Tastatur (10) der Mikro-Controller (8) einen wahlfreien Zugriff auf den Speicher der MM-Karte (3) hat, wobei insbesondere bei Auslösung eines Vorgangs "Vorwärts" oder "Rückwärts" durch die Tastatur (10) die Übertragung von Audio-Daten unterbrochen wird.

16. Verfahren nach einem oder mehreren der vorangehenden Ansprüche, **dadurch gekennzeichnet, daß** die Unterbrechung der Datenübertragung im Speicher durch Setzen eines Datenzeigers markiert wird.

17. Verfahren nach einem oder mehreren der vorangehenden Ansprüche, **dadurch gekennzeichnet, daß** durch den Mikro-Controller (8) des Audio-Players (1) ein Signalprozessor durch Programmdaten aus der MM-Karte (3) so gesteuert wird, daß auf der MM-Karte gespeicherte Textdaten in Audio-Daten gewandelt werden.

18. Verfahren nach einem oder mehreren der vorangehenden Ansprüche, **dadurch gekennzeichnet, daß** durch den Mikro-Controller (8) des Audio-Players (1) ein Signalprozessor durch Programmdaten aus der MM-Karte (3) so gesteuert wird, daß auf der MM-Karte gespeicherte Textdaten nicht in Audio-Daten gewandelt werden, sondern über die Wiedergabeeinheit (7) auf einem Display wiedergegeben werden.

19. Verfahren nach einem oder mehreren der vorangehenden Ansprüche, **dadurch gekennzeichnet, daß** die auf der MM-Karte (3) gespeicherten Textdaten komprimiert sind.

20. Verfahren nach einem oder mehreren der vorangehenden Ansprüche, **dadurch gekennzeichnet, daß** als Programmiersprache eine plattformunabhängige Programmsprache, insbesondere JAVA, verwendet wird.

## Claims

1. Audio player with a changeable data medium for audio data, where in the audio player (1) there is at least one microcontroller (8) with a connection to its own, peripheral keyboard (10) that has a data transmission circuit (V0V1) to a decompression circuit (4) and a data transmission circuit (V0V2) to an MM card (3) that can be connected in a module slot (2) of the player (1) and this MM card (3) features, directly or by insertion of the microcontroller (8), a data transmission circuit (V2V1 or V2V0-V0V1) to the decompression circuit (4) with its output leading to a D/A converter (5) and the output of the D/A converter (5) connected to a playback unit (7).

2. Audio player in accordance with patent claim 1, characterized such that the audio player (1) features in particular a serial interface (12) for coupling to a data source, in particular a computer or a data source (11) that has a connection to the microcontroller (8).

3. Audio player in accordance with one or several of the previous patent claims, characterized such that the microcontroller (8) features ROM and/or RAM components.

4. Audio player in accordance with one or several of the previous patent claims, characterized such that the MM card (3) features a microprocessor or ASIC for data control and a memory, in particular a flash memory or ROM.

5. Audio player in accordance with one or several of the previous patent claims, characterized such that the MM card (3) features a signal processor with program algorithms for converting text data into audio data.

6. Audio player in accordance with one or several of the previous patent claims, characterized such that the decompression circuit (4) has at least one signal processor and a serial high-speed interface to the MM card (3).

7. Audio player in accordance with one or several of the previous patent claims, characterized such that several module slots (2) for MM cards (3) are arranged in the audio player.

8. Audio player in accordance with one or several of the previous patent claims, characterized such that a graphic display is arranged on the audio player.

9. Audio player in accordance with one or several of the previous patent claims, characterized such that the audio player is integrated and/or can be integrated in an audio playback unit that features a different storage medium.

10. Procedure for controlling audio data by an audio player (1), characterized such that the audio data for the audio player (1) is supplied by means of changeable data media or via in particular a serial interface (12) and the supplied audio data are compressed by means of a microcontroller (8) of the audio player (1), the compressed audio data are transported from a memory of a data source (11) to a memory of the MM card (3) where they are stored, and/or compressed audio data are transported directly from the memory of the MM card (3) or via the microcontroller (8) to a decompression circuit (4) where they are decompressed and are then routed via a D/A converter (5) to a playback unit (7), and/or compressed audio data are transported from a memory of the data source (11) to the decompression circuit (4) where they are decompressed and are then routed via the D/A converter (5) to the playback unit (7).

11. Procedure in accordance with patent claim 10, characterized such that compressed audio data are transported directly or via the microcontroller (8) by means of a control system, in the form of a microprocessor or an ASIC of the MM card (3), from the memory of the MM card (3) to the decompression circuit (4) where they are decompressed.

12. Procedure in accordance with one or several of the previous patent claims, characterized such that the audio data are compressed in compliance with a standard, preferably MPEG II Layer 3.

13. Procedure in accordance with one or several of the previous patent claims, characterized such that the compressed audio data are transferred optionally at different data transfer rates to the decompression circuit (4).

14. Procedure in accordance with one or several of the previous patent claims, characterized such that the data transfer rate is at least 92 kbps.

15. Procedure in accordance with one or several of the previous patent claims, characterized such that the microcontroller (8) has free access to the memory of the MM card (3) via a keyboard (10) and the transfer of audio data is interrupted particularly when a "forward" or "backward" procedure is triggered via the keyboard (10).

16. Procedure in accordance with one or several of the previous patent claims, characterized such that the interruption in the data transfer is marked by a data pointer being set in the memory.

17. Procedure in accordance with one or several of the previous patent claims, characterized such that the microcontroller (8) of the audio player (1) controls a signal processor with program data from the MM card (3) in such a way that text data stored on the MM card are converted into audio data.

18. Procedure in accordance with one or several of the previous patent claims, characterized such that the microcontroller (8) of the audio player (1) controls a signal processor by means of program data from the MM card (3) in such a way that text data stored on the MM card are not converted into audio data but rather they are routed via the playback unit (7) to a display.

19. Procedure in accordance with one or several of the previous patent claims, characterized such that the text data stored on the MM card (3) are compressed.

20. Procedure in accordance with one or several of the previous patent claims, characterized such that a platform-independent program language, in particular JAVA, is used as the programming language.

## Revendications

1. Lecteur audio comportant un support de données interchangeable pour des données audio, avec au moins un micro-contrôleur (8) avec une liaison avec un clavier (10) périphérique propre intégré dans le lecteur audio (1), lequel micro-contrôleur comprend une liaison de données (V0V1) vers un circuit de décompression (4) et une liaison de données (V0V2) vers une carte MM (3) enfichable dans emplacement (2) du lecteur (1), ladite carte MM (3) comportant une liaison de données (V2V1) ou (V2V0-V0V1) directe ou par l'intermédiaire du micro-contrôleur (8) avec un circuit de décompression (4), dont la sortie mène à un convertisseur N/A (5), la sortie du convertisseur N/A (5) étant connectée à une unité de reproduction (7).

2. Lecteur audio selon la revendication 1, **caractérisé en ce que** ledit lecteur audio (1) comporte une interface (12), notamment une interface série, pour le couplage à une source de données, en particulier à un ordinateur ou à une source de données (11) relié au micro-contrôleur (8).

3. Lecteur audio selon une ou plusieurs des revendications précédentes, **caractérisé en ce que** le micro-contrôleur (8) comprend des composants ROM et/ou RAM.

4. Lecteur audio selon une ou plusieurs des revendications précédentes, **caractérisé en ce que** la carte MM (3) comporte un microprocesseur ou un circuit ASIC pour le contrôle de données ainsi qu'une mémoire, en particulier une mémoire de type flash ou ROM.

5. Lecteur audio selon une ou plusieurs des revendications précédentes, **caractérisé en ce que** la carte MM (3) comporte un processeur de signal avec des algorithmes de programme pour la conversion de données texte en données audio.

6. Lecteur audio selon une ou plusieurs des revendications précédentes, **caractérisé en ce que** le circuit de décompression (4) comprend au moins un processeur de signal et une interface série à haute vitesse vers la carte MM (3).

7. Lecteur audio selon une ou plusieurs des revendications précédentes, **caractérisé en ce que** plusieurs emplacements (2) pour des cartes MM (3) sont prévus dans le lecteur audio.

8. Lecteur audio selon une ou plusieurs des revendications précédentes, **caractérisé en ce qu'**un afficheur graphique est prévu sur le lecteur audio.

9. Lecteur audio selon une ou plusieurs des revendications précédentes, **caractérisé en ce que** le lecteur audio est intégré et/ou peut être intégré dans un appareil de reproduction audio qui comporte un autre moyen de mémoire.

10. Procédé de contrôle de données audio à l'aide d'un lecteur audio (1), **caractérisé en ce que** les données audio pour le lecteur audio (1) sont fournies par des supports de données interchangeables ou par l'intermédiaire d'une interface (12), notamment d'une interface série, et que l'on compresse les données audio fournies, **en ce qu'**à l'aide d'un micro-contrôleur (8) du lecteur audio (1), on transporte les données audio compressées d'une mémoire d'une source de données (11) vers une mémoire de la carte MM (3) et on les y enregistre, et/ou on transporte directement ou via le micro-contrôleur (8) les données audio compressées de la mémoire de la carte MM (3) vers un circuit de décompression (4) et on les y décompresse, puis on les transmet à une unité de reproduction (7) via un convertisseur N/A (5) et/ou on transporte les données audio compressées d'une mémoire de source de données (11) vers le circuit de décompression (4) et on les décompresse, puis on les transmet à l'unité de reproduction (7) via un convertisseur N/A (5).

11. Procédé selon la revendication 10, **caractérisé en ce qu'**avec une commande à microprocesseur ou avec un circuit ASIC de la carte MM (3), on transporte des données audio compressées de la mémoire de la carte MM (3) directement ou par l'intermédiaire du micro-contrôleur (8) vers le circuit de décompression (4) et on les décompresse.

12. Procédé selon une ou plusieurs des revendications précédentes, **caractérisé en ce que** les données audio sont compressées selon une norme, de préférence MPEG II Layer 3.

13. Procédé selon une ou plusieurs des revendications précédentes, **caractérisé en ce qu'**on transmet les données audio compressées de manière sélective avec différents taux de transfert vers le circuit de décompression (4).

14. Procédé selon une ou plusieurs des revendications précédentes, **caractérisé en ce que** le taux de transfert est d'au moins 92 kbits/s.

15. Procédé selon une ou plusieurs des revendications précédentes, **caractérisé en ce que** le micro-contrôleur (8) comporte un accès libre à la mémoire de la carte MM (3) par l'intermédiaire d'un clavier (10), la transmission de données audio étant interrompue notamment lors du déclenchement d'une fonction « Avance » ou « Retour » à l'aide du clavier (10).

16. Procédé selon une ou plusieurs des revendications précédentes, **caractérisé en ce que** l'interruption de la transmission de données audio est repérée dans la mémoire par la pose d'un repère de donnée.

17. Procédé selon une ou plusieurs des revendications précédentes, **caractérisé en ce qu'**un processeur de signal est commandé par le micro-contrôleur (8) du lecteur audio (1) à l'aide de données de programme de la carte MM (3), de telle sorte que des données texte mémorisées sur la carte MM soient converties en données audio.

18. Procédé selon une ou plusieurs des revendications précédentes, **caractérisé en ce qu'**un processeur de signal est commandé par le micro-contrôleur (8) du lecteur audio (1) à l'aide de données de programme de la carte MM (3) de telle sorte que des données texte mémorisées sur la carte MM ne soient pas converties en données audio, mais soient reproduites sur un afficheur par l'unité de reproduction (7).

19. Procédé selon une ou plusieurs des revendications précédentes, **caractérisé en ce que** les données texte mémorisées sur la carte MM sont compressées.

20. Procédé selon une ou plusieurs des revendications précédentes, **caractérisé en ce qu'**on utilise comme langage de programmation un langage indépendant de la plateforme, en particulier le langage JAVA.
